# EUROPEAN PATENT APPLICATION

(11) **EP 4 832 207 A2**
(43) Date of publication of application: **28.10.2026**
(21) Application number: 26204961.2
(22) Date of filing: 25.07.2023
(51) Int. Cl.: H01M 50/289

(54) **BATTERY PACK HAVING IMPROVED SAFETY**

(30) Priority: 01.09.2022 KR 20220110500
(62) Document number(s) of the earlier application(s) in accordance with Art. 76 EPC: 23860691.7 / 4 401 204
(71) Applicant: LG Energy Solution, Ltd., Seoul 07335 (KR)
(72) Inventor: SHIN, Ju Hwan, 34122 DAEJEON (KR); LEE, Hyoung Suk, 34122 DAEJEON (KR); JANG, Byung Do, 34122 DAEJEON (KR); YANG, Chang Hyeon, 34122 DAEJEON (KR); JEON, Bo Ra, 34122 DAEJEON (KR)
(74) Representative: Plasseraud IP

(57) **Abstract**

Disclosed herein relates to a battery pack, wherein the battery pack has the advantage of improving the safety of the battery pack against ignition or explosion by forming a separation space between a base plate and a corresponding battery module due to vaporization of a heat-conducting pad in the event of heat generation or thermal runaway in any of a plurality of battery modules provided therein, thereby inhibiting the propagation of heat from that battery module to adjacent battery modules.

## Description

This application claims the benefit of priority to Korean Patent Applications No. 10-2022-0110500, filed on Sept. 1, 2022, the disclosure of which is incorporated herein by reference in its entirety.

### [Technical Field]

The present invention relates to a battery pack with improved safety during thermal runaway.

### [Background Technology of the Invention]

Currently, commercialized secondary batteries include nickel-cadmium batteries, nickel-hydrogen batteries, nickel-zinc batteries, and lithium secondary batteries. Of these, lithium secondary batteries are gaining traction due to their ability to charge and discharge freely with little memory effect, very low self-discharge rate, and high energy density compared to nickel-based secondary batteries.

These lithium secondary batteries primarily utilize lithium-based oxides and carbon materials as the positive electrode and negative electrode active materials, respectively. A lithium secondary battery is composed of an electrode assembly in which a positive electrode plate and a negative electrode plate applied with a positive electrode active material and a negative electrode active material, respectively, are arranged with a separator therebetween, and an exterior material, that is, a battery case, in which the electrode assembly is sealed and stored together with an electrolyte.

In general, depending on the shape of the exterior material, lithium secondary batteries can be classified into can-type secondary batteries, where the electrode assembly is embedded in a metal can, and pouch-type secondary batteries, where the electrode assembly is embedded in a pouch of an aluminum laminated sheet.

In recent years, secondary batteries have been widely used not only in small devices such as portable electronics, but also in medium and large devices such as automobiles and energy storage systems (ESS) for power and energy storage. Secondary batteries are installed in battery packs and mounted on medium and large devices, and the like. Here, in order to increase the capacity and output of the battery pack, a large number of secondary batteries are included in the battery pack and electrically connected to each other. Here, a plurality of secondary batteries may be housed inside one module case to constitute one battery module, and a plurality of battery modules may be housed inside one pack case to constitute one battery pack.

Generally, secondary batteries can degrade when used in environments with higher-than-optimal temperatures, and in severe cases, may explode or ignite. Furthermore, when a plurality of secondary batteries is used to form a battery pack, the heat from the plurality of secondary batteries in a small space can be summed up, causing the temperature of the battery pack to rise more rapidly and severely. In particular, battery packs for vehicles or power storage devices, which are often used outdoors, are frequently exposed to direct sunlight and may be subjected to severe high temperature conditions, such as in summer or in desert areas.

In addition, the battery pack is configured by a plurality of battery modules or a plurality of secondary batteries. If an abnormal situation occurs in some of the plurality of battery modules or plurality of secondary batteries configuring the battery pack, heat generation may occur. Once heat generation occurs, the temperature of the battery may continue to rise, exceeding a predetermined threshold temperature and progressing to a thermal runaway condition. If this thermal runaway occurs inside a battery module or battery pack with a plurality of battery cells stacked together, it can induce an explosion or ignition of the battery cells. In this case, flames may propagate to other normally operating battery cells, resulting in a cascading explosion of plurality of battery cells, which can cause damage to the device mounted with the battery module/pack and expose the user to a safety hazard.

### [Prior Art Document]

Korean Patent Publication No. 10-2019-0018389

### [Description of the Invention]

### [Technical Problem]

Accordingly, it is an object of the present invention to provide a battery pack with improved safety by effectively controlling heat generation or thermal runaway situations.

### [Technical Solution]

To address the issues described above,

In an exemplary embodiment, the present invention provides,
a battery pack, comprising:
a plurality of battery modules;
a pack case a plurality of battery modules and including,
   a baseplate including a plurality of module areas in which the plurality of battery modules are located,
   a sidewall extending vertically and coupled along an edge of the base plate to enclose the plurality of module areas,
   a bulkhead coupled to the sidewall and compartmentalizes the base plate to form a plurality of module areas, wherein the bulkhead comprises a fastening part at a lower end thereof that projects inwardly and engages each of the plurality of battery modules; and
a heat-conducting pad between the battery module and the module area of the base plate that phase changes to a gaseous state at a high temperature to form a separation space.

Here, the fastening part may be located at a height of 0.5 mm to 5.0 mm based on the lower end of the bulkhead.

In addition, the fastening part may be formed in plurality by being spaced at predetermined distance along the lower end of the bulkhead.

Moreover, the heat-conducting pad may include a polymer that vaporizes or sublimates at 100°C to 800°C.

In addition, the heat-conducting pad may have a structure in which a heat-conducting filler is dispersed in a matrix including a polymer that vaporizes or sublimates at 100°C to 800°C.

Here, the heat-conducting filler may include one or more of the following materials: aluminum, copper, zinc, magnesium, stainless steel, silver, alumina (Al₂O₃), silicon oxide (SiO₂), aluminum nitride (AlN₃), carbon nanotubes, silicon carbide (SiC), graphite, and activated carbon.

In addition, the heat-conducting filler may either be acicular particles or fiber-like particles.

Moreover, the heat-conducting filler may be included in the amount of 1 wt.% to 30 wt.% with respect to the total weight of the heat-conducting pad.

In addition, the heat-conducting pad may have an average thickness of 0.5 mm to 5.5 mm, but a thickness equal to or greater than a separation distance between the battery module and the base plate.

Furthermore, the module area may include a center part and peripheral part, and the heat-conducting pad may be located in the center part.

### [Advantageous Effects]

The battery pack according to the present invention has the advantage that in the event of heat generation in any of the plurality of battery modules provided therein or thermal runaway, vaporization of a heat-conducting pad can inhibit the propagation of heat from that battery module to adjacent battery modules by forming a separation space between the base plate and the corresponding battery module, thereby improving the safety of the battery pack against ignition or explosion.

### [Brief Description of the Drawings]

FIG. 1 is a perspective view illustrating the structure of a battery pack according to the present invention.
FIG. 2 is a perspective and plan view of a pack case according to the present invention.
FIG. 3 is a cross-sectional view illustrating the structure of a battery pack according to the present invention installed with a battery module.

### [Best Mode for Carrying out the Invention]

The present invention may have various modifications and various examples, and specific examples are illustrated in the drawings and described in detail in the description.

However, it should be understood that the present invention is not limited to specific embodiments, and includes all modifications, equivalents or alternatives within the spirit and technical scope of the present invention.

The terms "comprise," "include" and "have" are used herein to designate the presence of characteristics, numbers, steps, actions, components or members described in the specification or a combination thereof, and it should be understood that the possibility of the presence or addition of one or more other characteristics, numbers, steps, actions, components, members or a combination thereof is not excluded in advance.

In addition, when a part of a layer, a film, a region or a plate is disposed "on" another part, this includes not only a case in which one part is disposed "directly on" another part, but a case in which a third part is interposed there between. In contrast, when a part of a layer, a film, a region or a plate is disposed "under" another part, this includes not only a case in which one part is disposed "directly under" another part, but a case in which a third part is interposed there between. In addition, in this application, "on" may include not only a case of disposed on an upper part but also a case of disposed on a lower part.

Hereinafter, the present invention will be described in more detail.

### Battery pack

In one embodiment, the present invention provides,
a battery pack, comprising:
a plurality of battery modules;
a pack case a plurality of battery modules and including,
   a baseplate including a plurality of module areas in which the plurality of battery modules are located,
   a sidewall extending vertically and coupled along the edge of the base plate to enclose the plurality of module areas,
   a bulkhead coupled to the sidewall and compartmentalizes the base plate to form a plurality of module areas, wherein the bulkhead comprises a fastening part at a lower end thereof that projects inwardly and engages each of the plurality of battery modules; and
a heat-conducting pad between the battery module and the module area of the base plate that phase changes to a gaseous state at a high temperature to form a separation space.

A battery pack according to the invention includes a plurality of battery modules and a pack case to accommodate them. Here, the pack case includes: a fastening part for fixing the battery modules to a lower inner side of a bulkhead such that the battery modules are disposed at a position spaced apart from the base plate at a certain height; and a heat-conducting pad for forming a separation space between the base plate and the battery modules fixed to the fastening part by phase changing to a gaseous state at a high temperature. The fastening part and the heat-conducting pad may form a separation space between the base plate and the corresponding battery module due to vaporization of the heat-conducting pad in the event of heat generation in any one of the plurality of battery modules or thermal runaway. The separation space thus formed may inhibit the heat of the corresponding battery module from propagating to neighboring battery modules, thereby inhibiting the battery pack from igniting and/or exploding.

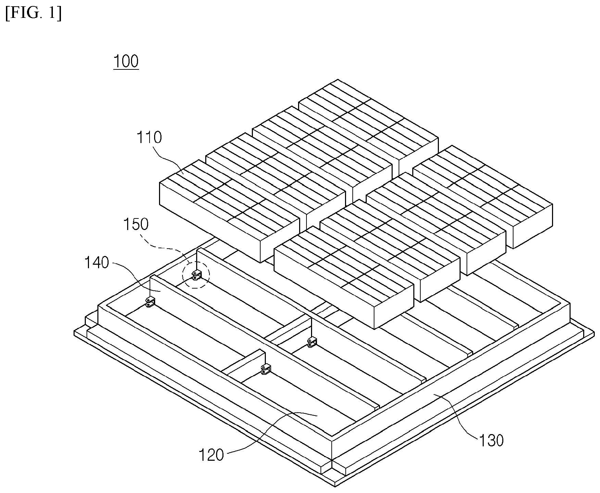

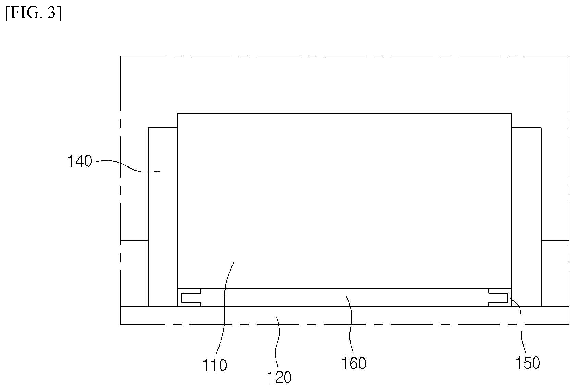

FIGS. 1 to 3 are perspective view, plan view, and cross-sectional view illustrating the structure of the battery pack 100 according to the present invention. Hereinafter, the present invention will be described in more detail with reference to FIGS. 1 to 3.

The battery pack 100 of the present invention includes a battery module 110 and a pack case in which the battery module 110 is housed.

Here, the battery module 110 referred to in the present invention may be provided with a module case for storing such secondary batteries. In other words, the module case may be said to constitute an outer part or an exterior surface of the battery module 110, and the interior of such module case may house one or more secondary batteries. In particular, when the battery module 110 is equipped with a plurality of secondary batteries, the secondary batteries may be stacked in a plurality in at least one direction.

In this case, if the secondary batteries provided in the battery module 110 are pouch-type secondary batteries, a plurality of stackable cartridges may be further provided in the battery module 110. The stackable cartridges may be configured to be stackable with each other to facilitate stacking of the pouch-type secondary batteries, while improving fixedness. In addition, the stackable cartridges may be configured with a frame around the edge of the pouch-type secondary battery.

In addition, the secondary batteries provided in the battery module 110 are not limited to the pouch-type batteries described above, but may, for example, be cylindrical cells, i.e., the battery module 110 may employ a variety of battery cells known in the art.

The module case may be formed in a roughly cuboidal shape, as illustrated in FIG. 1. In this case, the module case may have an upper part, a lower part, a left side part, a right side part, a front end part, and a rear end part.

In addition, the module case may be provided with module terminals on at least one of the front end part and the rear end part. The module case may be configured in the form of a main body part having an open front end part and/or rear end part and a hollow interior to store the secondary battery, a front end cover covering the front end part, and/or a rear end cover covering the rear end part. Alternatively, the module case may comprise a main body part having an open upper part and formed in the form of a box to store the secondary battery in an interior space, and an upper part cover to seal the open end of the upper part. Besides, the module case may be configured in various other forms.

The module case may be configured in a sealed form to protect the secondary battery housed therein from external physical and chemical factors. For example, the module case may be configured in such a way that the upper, lower, left side, right side, front, and rear parts of the secondary batteries housed therein are all closed, such that the upper, lower, left side, right side, front, and rear parts of the secondary battery are not exposed to the outside. In such a configuration, the module case may be an outer component of a single battery module and may be a boundary distinguishing the exterior and interior of the battery module.

The module case may be provided with an electrically insulating material, such as plastic, to provide electrical insulation on the exterior and interior of the battery module 110. However, the module case may also be configured by a variety of other materials or may further include other materials.

The plurality of secondary batteries provided in the battery module 110 may be electrically connected in series and/or parallel with each other. In addition, the module case of the battery module 110 may be provided with module terminals (+ terminals, - terminals) on the outside of the module case, such as on the upper part of the front surface of the module case, to be electrically connected to the secondary batteries inside the battery module 110. These module terminals may be electrically connected to each other via power cables or busbars (not shown) for interconnecting the battery module 110 to each other or to devices external to the battery module 110. Specific configurations of the battery module 110 for this purpose are not described herein, as configurations in the art may be applied.

The battery modules 110 may be provided in a plurality in a battery pack. Furthermore, the plurality of battery modules 110 may be arranged in a left-to-right direction with side surfaces facing each other. For example, the battery pack 100 may include at least two battery modules 110. In this case, the two battery modules 110 may be arranged in a left-to-right direction with a right side and a left side facing each other.

In addition, the battery pack 100 may include a pack case including the battery module 110 described above. As desired, the battery pack 100 may further include a pack case cover (not shown) that is coupled to the pack case to cover an upper part of the battery module 110 at an upper part of the pack case.

Here, the pack case may include a base plate 120 disposed at a lower part of the battery module 110 and including a module area in which the battery module 110 is located. Moreover, the base plate 120 may have a plate shape extending in a horizontal direction. Here, the horizontal direction refers to the direction of a plane of a flat plane. The base plate 120 may be provided with a metal material having a good mechanical rigidity.

In addition, a plurality of battery modules 110 may be located on the upper part of the base plate 120. To this end, the base plate 120 may include a module area in which the battery modules 110 are located, and sidewalls 130 extending vertically along the edge of the base plate to enclose the module area may be coupled together to form a space for housing the battery modules 110.

In this case, the base plate 120 may not only perform the function of providing a space for the battery module 100 to be housed at the lower part, but may also perform the function of a heat sink to dissipate heat generated by the battery module 110 to the outside. To this end, the base plate 120 may be provided with cooling means (not shown) on the other side opposite to the side on which the battery module 110 is housed, so that a refrigerant such as coolant or air can flow in a contacted state. In addition, the coupling of the sidewalls 130 may be performed in a manner conventional in the art, for example, by friction stir welding, or the like.

Furthermore, the pack case includes a bulkhead 140 that divides the interior space into a plurality of battery module areas such that a plurality of battery modules 110 may be mounted in the accommodation spaces provided by the sidewalls 130. In this case, the bulkhead 140 may be coupled so that both ends are perpendicular to the two opposing sidewalls 130, respectively, as shown in FIG. 1, and the lower end part is configured to be coupled to the upper surface of the base plate 120.

Additionally, the bulkhead 140 includes a fastening part 150 that fixes the battery module 110 to the lower end interior such that the battery module 110 is disposed at a position spaced apart from the base plate 120 at a certain height.

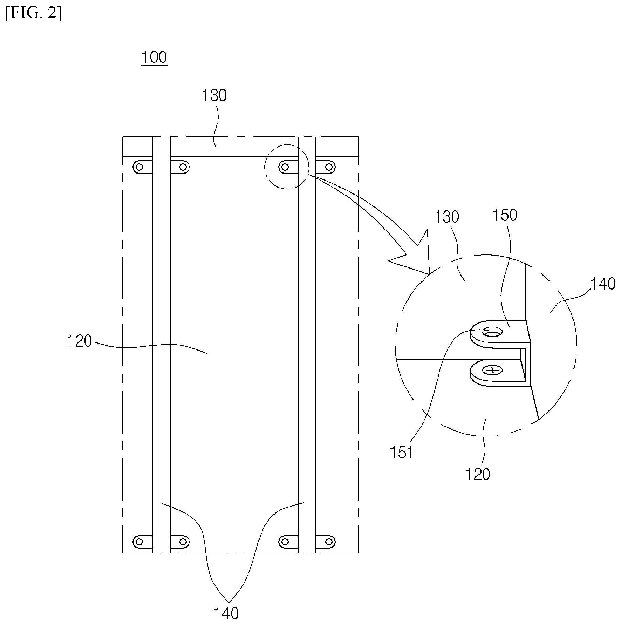

The fastening part 150 is located on the inner lower part of the bulkhead 140 and functions to engage the lower surface of the battery module 110 to support the battery module 110. To this end, the fastening part 150 may not be particularly limited as long as it has a shape that supports the battery module 110 at the lower part. However, it may preferably include a side opposite to the lower surface of the battery module 110 as shown in FIG. 2, and may include a fastening hole 151 penetrating through the side opposite to the lower surface of the battery module 110 such that a fastening member such as a bolt (not shown) having a threaded structure may be fixed when the side is in contact with the lower surface of the battery module 110.

In this case, the fastening part 150 may be disposed such that the battery module 110 supported on the upper surface of the fastening part is spaced apart from the base plate 120 by a predetermined distance. Specifically, the fastening part 150 may be disposed at a height of 0.5 mm to 5.0 mm relative to the upper surface of the base plate 120, and more specifically, the fastening part 150 may be disposed at a height of 0.5 mm to 3.0 mm; 0.5 mm to 1.5 mm; or 0.8 mm to 1.2 mm relative to the upper surface of the base plate 120 or the lower end of the bulkhead 140. By adjusting the position of the fastening part 150 to satisfy the above heights relative to the upper surface of the base plate 120, the present invention can prevent excessive spacing from reducing the efficiency of internal heat dissipation during normal operation of the battery pack 100. Furthermore, by adjusting the position of the fastening part 150 as described above, when any of the plurality of battery modules 110 develops heat or during a thermal runaway, the narrow separation distance may prevent heat from being rapidly transferred to the neighboring battery modules 110 through the base plate 120, which functions as a heat sink.

Moreover, the fastening part 150 may be located on the inner lower part of the bulkhead 140, but a plurality of them may be spaced apart at a predetermined distance such that they are securely fastened along the lower end edge of the battery module 110.
In one example, the fastening part 150 may be disposed at each of both lower end parts of the inner surface of the bulkhead 140 facing the battery module 110, as shown in FIG. 2.

As another example, the fastening part 150 may be disposed at both lower end parts and a center lower part, respectively, of the inner surface of the bulkhead 140 facing the battery module 110.

The pack case includes a heat-conducting pad 160 in the separation space formed between the battery module 110 and the base plate 120 by the fastening part 150. The heat-conducting pad 160 serves to transfer heat generated by the battery module 110 during normal operation of the battery pack 100 so that the heat can be dissipated through the base plate 120. In addition, the heat-conducting pad 160 vaporizes or sublimates during abnormal operation of the battery pack 100, such as during heat generation and/or thermal runaway of the battery module 110 in contact with the heat-conducting pad 160, to form a separation space between the battery module 110 and the base plate 120.

To this end, the heat-conducting pad 160 may include a polymer that vaporizes or sublimates at 100-800°C so as to form a separation space in the event of abnormal operation of the battery module 110. More specifically, the polymer included in the heat-conducting pad 160 may include an acrylic resin, an ethoxy resin, a polystyrene-based resin, a silicone resin, a polyester resin, a polyolefin resin, or the like, and may be vaporized or sublimated at 100°C to 600°C; 100°C to 400°C; 100°C to 300°C; or 150°C to 300°C by using additives to these resins or by physico-chemical modification. By configuring the heat-conducting pad with a polymer that vaporizes or sublimates in the above range, the present invention can achieve a cooling effect due to the absorbed heat of vaporization/sublimation of the heat-conducting pad during heat generation and/or thermal runaway of the battery module 110 compared to a heat-conducting pad configured with a conventional simple melting polymer. Furthermore, the heat-conducting pad can separate the heated battery module 110 and the base plate 120 before the ignition and/or explosion of the battery pack 100 occurs, thereby preventing heat propagation from the heated and/or thermal runaway battery module 110 to adjacent modules.

Furthermore, the heat-conducting pad 160 may implement a high thermal conductivity as a matrix including a polymer that vaporizes or sublimates at 100-800°C (hereinafter referred to as a "polymeric matrix") by itself, and may have a structure in which a heat-conducting filler is dispersed in the matrix including a polymer that vaporizes or sublimates at 100 to 800°C to implement a higher thermal conductivity.

In this case, the heat-conducting filler may be applied without being limited as long as it is applied to implement a heat-conducting effect in a battery, battery module, or battery pack or the like, but may specifically include one or more of aluminum, copper, zinc, magnesium, stainless steel, silver, alumina (Al₂O₃), silicon oxide (SiO₂), aluminum nitride (AlN₃), silicon carbide (SiC), carbon nanotubes, graphite, and activated carbon.

In addition, the heat-conducting filler may be included in an amount of 1 to 30 wt% with respect to the total weight of the heat-conducting pad to prevent contact of the battery module 110 with the base plate 120 after vaporization or sublimation of the polymeric matrix. More specifically, the heat-conducting filler may be included in an amount of 1 wt.% to 20 wt.%; 1 wt.% to 10 wt%; 10 wt.% to 30 wt%; 15 wt.% to 30 wt%; or 10 wt.% to 20 wt%, based on the total weight of the heat-conducting pad.

Furthermore, the heat-conducting filler may be a needle-shaped particle or a fiber-shaped particle in order to implement a high thermal conductivity of the heat-conducting pad even if it contains a small amount of heat-conducting filler. In this case, the heat-conducting filler has the advantage of being able to form an inter-filler heat conduction network inside the polymeric matrix even if a small amount of the heat-conducting filler is dispersed, thereby implementing a high thermal conductivity.

Here, the average size of the heat-conducting filler may be 1,000 µm or less, more specifically, 900 µm or less; 750 µm or less; 500 µm or less; 300 µm or less; 100 µm or less; 1 µm to 500 µm; 10 µm to 500 µm; 50 µm to 500 µm; 100 µm to 500 µm; 200 µm to 400 µm; or 50 µm to 300 µm. Here, "average size" may mean the average value of the "long axis length" (the longest length through the center of the particle) and the "short axis length" (the shortest length through the center of the particle) of the heat-conducting filler. By adjusting the average size of the heat-conducting filler to the above range, the present invention can prevent contact between the battery module 110 and the base plate 120 after vaporization or sublimation of the polymeric matrix, while implementing a high conductivity of the heat-conducting pad 160.

Meanwhile, the heat-conducting pad 160 may have an average thickness of 0.5 mm to 5.5 mm, but may have a thickness equal to or thicker than the separation distance of the battery module 110 and the base plate 120. By having an average thickness equal to or thicker than the separation distance between the battery module 110 and the base plate 120, the heat generated by the battery module 110 can be easily dissipated to the base plate 120, that is, from the upper surface of the heat-conducting pad 160 to the lower surface of the heat-conducting pad 160, during normal operation of the battery pack 100. Furthermore, by having the above-described thickness condition, the heat-conducting pad 160 has the advantage of being able to act as a buffer when an external force is applied to the battery pack 100, especially when an external force is applied from the upper part, thereby providing higher safety.

Furthermore, the heat-conducting pad 160 may be disposed throughout the module area of the base plate 110, and in some cases may be partially disposed. The heat-conducting pad 160 may be disposed throughout the module area of the base plate 120, but may be partially formed in a certain area, specifically 60 to 99% of the total area. Accordingly, the heat-conducting pad 160 may increase the surface area in contact with the battery module 110, thereby further improving thermal conductivity.

In one example, the module area may include a center part and a peripheral part, and the heat-conducting pad may be located in the center part. In this case, the heat-conducting pad may have the advantage of more effectively dissipating internal heat, which has a high frequency and degree of heat generation during normal operation of the battery pack.

The battery pack according to the present invention has the advantage that by having the above-described configuration, it is possible to inhibit the propagation of heat from any of the plurality of battery modules provided therein to adjacent battery modules by forming a separation space between the base plate and the corresponding battery module due to vaporization of the heat-conducting pad in the event of heat generation or thermal runaway, thereby improving the safety of the battery pack against ignition or explosion.

Hereinafter, the present invention will be described in more detail by way of examples and experimental examples.

However, the following examples and experimental examples are illustrative of the present invention, and the present invention is not limited to the following examples.

### Comparative Examples.

A battery pack was prepared in which eight battery modules including ten pouch cells were inserted into a pack case, two horizontally and two vertically. In this case, the pack case has the structure as shown in FIG. 1, but the "fastening part" and "heat-conducting pads" are excluded.

### Examples.

A battery pack was prepared in which eight battery modules including ten pouch cells were inserted into a pack case, two horizontally and two vertically. In this case, a pack case having the same structure as FIG. 1 was used, and a heat-conducting pad having an average thickness equal to the separation distance between the battery module and the base plate (about 1.8±0.2 mm) was applied. In this case, the heat-conducting pad was composed of a polymeric matrix having a vaporization temperature as shown in Table 1 below, and in the case of having a heat-conducting filler, the content of the heat-conducting filler was adjusted to about 15wt% based on the total weight of the heat-conducting pad. Furthermore, the type and arrangement of the heat-conducting filler applied to the heat-conducting pad is shown in Table 1.

**[Table 1]**

| | Vaporization temperature of polymeric matrix | Heat-conducting filler | |
|---|---|---|---|
| | | Type | Location |
| Example 1 | 300±50°C | - | - |
| Example 2 | 300±50°C | Needle-shaped copper particles | Entire module area |
| Example 3 | 300±50°C | Carbon nanotubes | Entire module area |
| Example 4 | 300±50°C | Needle-shaped copper particles | Center part of the module area (area ratio: approx. 70%) |

### Experimental Examples.

To evaluate the safety of a battery pack according to the present invention, thermal runaway was induced in one of the battery modules mounted in the battery pack and the time taken for ignition to occur in the battery module adjacent to the battery module where thermal runaway was induced was measured.

Specifically, the battery packs prepared in the Examples and Comparative Examples were all charged to 100% SOC. Then, a heating pad was then mounted on the upper part of any one of the four centrally placed battery modules of the eight battery modules housed in the pack case, and the heating pad was operated at 300 W to induce thermal runaway of the battery modules placed in the lower part of the heating pad.

Here, while observing the inside of the battery pack for 10 minutes from the time the heating pad was activated, i) the time it took for the battery module placed in the lower part of the heating pad to ignite was measured, and ii) whether the battery module placed adjacent to the battery module mounted with the heating pad ignited was checked. The results are shown in Table 2 below.

**[Table 2]**

| | Module ignition time required | Whether adjacent battery modules ignited |
|---|---|---|
| Comparative Example 1 | 3 minutes, 31 seconds | O |
| Example 1 | 4 minutes, 21 seconds | X |
| Example 2 | 4 minutes, 48 seconds | X |
| Example 3 | 4 minutes, 51 seconds | X |
| Example 4 | 4 minutes, 42 seconds | X |

As shown in Table 2, it can be seen that the battery pack according to the present invention has improved high temperature safety.

Specifically, the battery pack of the examples was found to inhibit ignition of the battery modules when the battery modules are exposed to high temperatures because the heat-conducting pads vaporize to form a separation space between the battery modules and the base plate, which functions as a heat sink, preventing heat propagation to adjacent battery modules.

In contrast, the battery pack in the comparative examples, where the battery modules exposed to high temperature and base plates were positioned to contact each other, showed ignition in the adjacent battery module.

From these results, it follows that the battery pack according to the present invention can inhibit the propagation of heat from a battery module to an adjacent battery module by forming a separation space between the base plate and the corresponding battery module due to vaporization of the heat-conducting pad when the battery module is heated to a high temperature or thermal runaway.

While the foregoing has been described with reference to preferred examples of the invention, it will be understood by those skilled in the art or having ordinary knowledge of the art that various modifications and changes can be made to the invention without departing from the field of thought and technology described in the patent claims that will follow.

Accordingly, the technical scope of the invention is not limited to what is described in the detailed description of the specification, but must be determined by the claims of the patent.

### [Reference numerals]

| | | | |
|---|---|---|---|
| 100: | BATTERY PACK OF THE PRESENT INVENTION | | |
| 110: | BATTERY MODULE | | |
| 120: | BASE PLATE | 130: | SIDEWALL |
| 140: | BULKHEAD | 150: | FASTENING PART |
| 151: | FASTENING HOLE | 160: | HEAT-CONDUCTING PAD |

Preferred examples of the Invention are specified in the following items:

### [Item 1]

A battery pack, comprising:
a plurality of battery modules;
a pack case a plurality of battery modules and including,
   a baseplate including a plurality of module areas in which the plurality of battery modules are located,
   a sidewall extending vertically and coupled along an edge of the base plate to enclose the plurality of module areas,
   a bulkhead coupled to the sidewall and compartmentalizes the base plate to form a plurality of module areas, wherein the bulkhead comprises a fastening part at a lower end thereof that projects inwardly and engages each of the plurality of battery modules; and
a heat-conducting pad between the battery module and the module area of the base plate that phase changes to a gaseous state at a high temperature to form a separation space.

### [Item 2]

The battery pack of item 1, wherein the fastening part is located at a height of 0.5 mm to 5.0 mm based on the lower end of the bulkhead.

### [Item 3]

The battery pack of item 1, wherein the fastening part is formed in plurality by being spaced at predetermined distance along the lower end of the bulkhead.

### [Item 4]

The battery pack of item 1, wherein the heat-conducting pad includes a polymer that vaporizes or sublimates at 100°C to 800°C.

### [Item 5]

The battery pack of item 1, wherein the heat-conducting pad has a structure in which a heat-conducting filler is dispersed in a matrix including a polymer that vaporizes or sublimates at 100°C to 800°C.

### [Item 6]

The battery pack of item 5, wherein the heat-conducting filler includes one or more of the following materials: aluminum, copper, zinc, magnesium, stainless steel, silver, alumina Al₂O₃, silicon oxide SiO₂, aluminum nitride AlN₃, carbon nanotubes, silicon carbide SiC, graphite, and activated carbon.

### [Item 7]

The battery pack of item 5, wherein the heat-conducting filler is either acicular particles or fiber-like particles.

### [Item 8]

The battery pack of item 5, wherein the heat-conducting filler is included in the amount of 1 wt.% to 30 wt.% with respect to a total weight of the heat-conducting pad.

### [Item 9]

The battery pack of item 1, wherein the heat-conducting pad has an average thickness of 0.5 mm to 5.5 mm, which is equal to or greater than a separation distance between the battery module and the base plate.

### [Item 10]

The battery pack of item 1, wherein the module area includes a center part and peripheral part, and the heat-conducting pad is located in the center part.

## Claims

1. A battery pack (100), comprising:
a plurality of battery modules (110);
a pack case receiving the plurality of battery modules and including:
- a base plate (120) including a plurality of module areas in which the plurality of battery modules (110) are located,
- a sidewall (130) extending vertically and coupled along an edge of the base plate (120) to enclose the plurality of module areas,
**characterized in that** the battery pack further comprises:
- a bulkhead (140) coupled to the sidewall (130) and arranged to compartmentalize the base plate (120) to form the plurality of module areas ; and
- heat-conducting pads (160), between the battery modules and the corresponding module areas of the base plate, at least comprising a polymer that vaporizes or sublimates at 100°C to 800°C to form separation spaces between the battery modules and the base plate, wherein the module area includes a center part and peripheral part, and the heat-conducting pad is located in the center part.

2. The battery pack of claim 1, wherein the heat-conducting pad (160) has a structure in which a heat-conducting filler is dispersed in a matrix including the polymer that vaporizes or sublimates at 100°C to 800°C.

3. The battery pack of claim 2, wherein the heat-conducting filler includes one or more of the following materials: aluminum, copper, zinc, magnesium, stainless steel, silver, alumina Al₂O₃, silicon oxide SiO₂, aluminum nitride AlN₃, carbon nanotubes, silicon carbide SiC, graphite, and activated carbon.

4. The battery pack of claim 2, wherein the heat-conducting filler is either needle-shaped particles or fiber-like particles.

5. The battery pack of claim 2, wherein the heat-conducting filler is included in the amount of 1 wt.% to 30 wt.% with respect to a total weight of the heat-conducting pad.

6. The battery pack of claim 1, wherein the heat-conducting pad (160) has an average thickness of 0.5 mm to 5.5 mm, which is equal to or greater than a separation distance between the battery module and the base plate.
